# EUROPEAN PATENT SPECIFICATION

(11) **EP 1 722 513 B1**
(45) Date of publication and mention of the grant of the patent: **05.08.2009**
(21) Application number: 06113733.7
(22) Date of filing: 09.05.2006
(51) Int. Cl.: H04L 12/28

(54) **Generating identification information**
Erzeugung von Identifizierungsinformationen
Génération d'information d'identification

(30) Priority: 10.05.2005 KR 2005039047
(43) Date of publication of application: 15.11.2006
(73) Proprietor: Samsung Electronics Co., Ltd, Suwon-si, Gyeonggi-do 442-742 (KR)
(72) Inventor: Lee, Sang-ho 113-703 Daelim Apt., Seoul (KR); Park, In-ho 3-1205 Woosung 3-cha Apt., Seoul (KR)
(74) Representative: Walaski, Jan Filip

(56) References cited:
- WO-A-98/31118
- WO-A-03/085889
- US-A1- 2004 047 298
- US-A1- 2004 139 187

## Description

The present invention relates to generating identification information, more particularly, to generating identification information for audio/video (A/V) devices existing on an A/V network, by which a user may definitely discriminate an audio/video (A/V) device from other devices by providing A/V devices having the same device information with additional identification information.

With the rapid development of technologies to process digital audio/video (A/V) data, diverse A/V devices such as digital televisions (TVs), set-top boxes, digital versatile disc (DVD) players, and digital amplifiers have been installed and used in homes and offices. Users at homes or offices conveniently control these A/V devices using remote control units. However, as the number of A/V devices installed in a predetermined space increases, controlling the A/V devices becomes more complicated and difficult.

Therefore, approaches to systemize a plurality of A/V devices by associating them with one another and enabling a user to conveniently control the systemized A/V devices have been studied. Here, the A/V devices are connected with each other through a network interface to form a single A/V network system.

As one of the approaches, an eXpandable Home Theater (XHT), i.e., middleware for A/V home networking has been developed and proposed. The XHT is a home network solution based on a digital TV that has been developed by Samsung Electronics and has been adopted for use by the U.S. Consumer Electronics Association (CEA) standard.

According to the XHT, an A/V device connected with a digital TV and a plurality of digital TVs may be controlled using an Institute of Electrical and Electronics Engineers (IEEE) 1394 cable that relatively stably transmits high definition (HD) signals and an Internet protocol (IP) that is a communication protocol usually used on the Internet. When the XHT is used, a user in a bedroom may view digital broadcasting using a digital broadcast receiving function of a digital TV installed in a living room.

A cheap network interface unit (NIU) using the XHT is made in a format of a memory card and is, thus, easy to change according to a receiving scheme such as a terrestrial, satellite, or cable scheme to reduce a financial burden of a broadcasting company. In particular, the XHT provides diverse portal services through a browser embedded in a digital TV.

In a sequence of operations of A/V devices implemented using the XHT, a local IP address is automatically allocated to each of A/V devices on an XHT network according to a predetermined address allocation algorithm. Next, each of the A/V devices having the local IP address expresses device information thereof in an eXtensible Markup Language (XML) file, i.e., a deviceInfo.xml file, according to a predefined syntax form (defined by a deviceInfo.xsd file) and transmits the XML file to the other A/V devices. The deviceInfo.xml file includes a uniform resource identifier (URI) of an XHT931.xsd file describing a set of HyperText Transfer Protocol (HTTP) commands to operate the A/V devices.

The A/V device generating the deviceInfo.xml file generates the XHT931.xml file including the HTTP commands, which the A/V device supports, with reference to the XHT931.xsd file. The deviceInfo.xml file expressing the information of the A/V device and the XHT931.xm1 file including the HTTP commands supported by the A/V device are received by any one of the other A/V devices, which recognize the information of the A/V device transmitting the files based on the received files and control the A/V device using the HTTP commands.

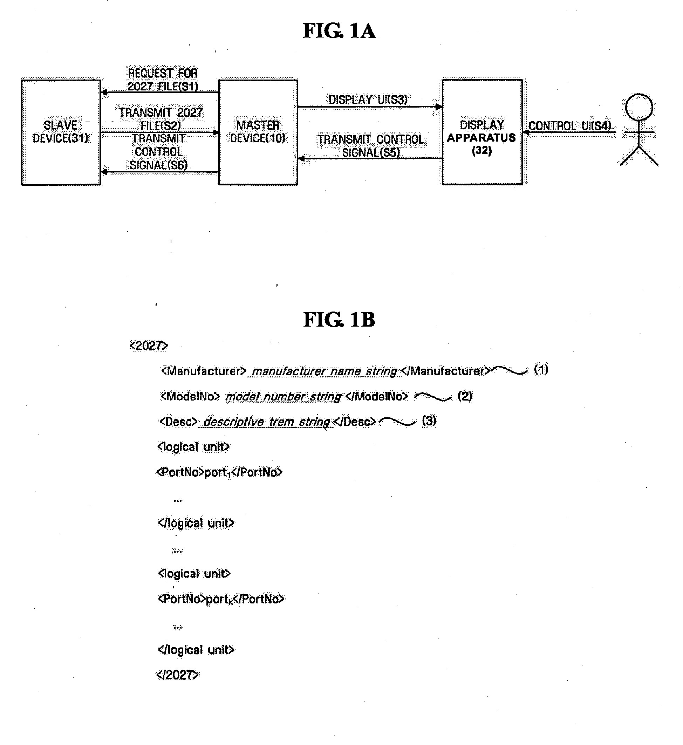

FIG. 1A is a view showing an operating procedure of a master device and slave devices existing on an A/V network. As shown in FIG. 1A, a slave device 31, accessing the A/V network, generates a 2027 file. Here, the 2027 file includes a variety of information regarding a device, such as a manufacturer name, a model number, a descriptive term, and a logical unit. Then, the slave device 31 stores device information based on the 2027 file.

Next, the master device 10 sends a request to transmit the device information to the slave device 31 in operation S1. In operations S2 and S3, a user interface (UI) for each of the devices existing on the A/V network is generated based on the device information transmitted from the slave device 30 and is then displayed on the display apparatus 32.

In operations S4 and S5, the user selects a predetermined device to be manipulated through the UI shown on the display apparatus 32 and requests the selected device to be operated. Then, the master device 10 receives a control signal resulting from the user's manipulation and controls a corresponding slave device 31 in operation S6.

FIG. 1B is a view showing an example of a 2027 file in accordance with the CEA 2027 specification. As shown in FIG. 1B, manufacturers' names of devices existing on the A/V network, e.g., a master device and slave devices, are placed at respective tag positions indicated by </Manufacturer> (1), model numbers are placed at respective tag positions indicated by ModelNo tag position (2), and descriptive terms are placed at respective tag positions indicated by Desc tag position (3).

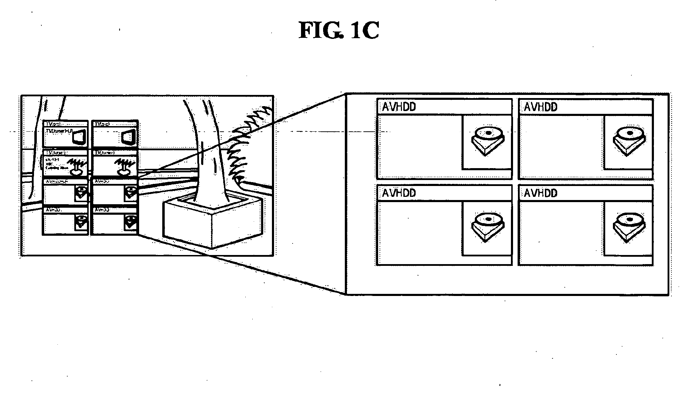

FIG. 1C is a view showing examples of displays of a user interface on a screen of each slave device. As shown, icons of the master device and the slave devices, existing on the A/V network, are generated based on the 2027 file information of the master device 10. The slave devices and the generated icons are displayed on a screen of the display apparatus 32.

As shown in FIG. 1C, when icons of the master device 10 and the slave device 11 are displayed on the screen of the display apparatus 32, a user selects a desired product using the respective UIs of the master device 10 and the slave device 11. However, if products having the same model number and/or if products having the same manufacturer are available on the same A/V network, UIs delivered through the display apparatus 32 have icons of the same shape and the same product information. Accordingly, the user cannot discriminate a desired product from others through the use of UIs delivered through the display apparatus 32, which are provided by the master device 10.

Therefore, it is necessary to develop a technique of enabling users to select a predetermined device by clearly discriminating the predetermined device from other devices having the same manufacturer name and same model number, which exist on an A/V network.

According to the present invention, there is provided an apparatus for generating identification information for devices connected to a network according to claim 1.

An aspect of the present invention provides a device, system and method of generating identification information of audio/video (A/V) devices existing on an A/V network, by which a user may relatively clearly discriminate an audio/video (A/V) device from others by further providing A/V devices having the same device information with identification information.

Specifically, the present invention provides an improved XHT protocol offering second identification information to A/V devices having the same device information.

According to an aspect of the present invention, there is provided a master device to generate identification information of audio/video (A/V) devices existing on an A/V network, the master device comprising: an information requester to send a request for device information and first identification information of each of the existing slave devices; a determiner to check the device information transmitted in response to the request and to determine whether any existing devices have the same device information; a second identification information generator to generate second identification information of each of the devices that are found to have the same device information; and an information storage to store the transmitted device information, the first identification information and the generated second identification information.

According to another aspect of the present invention, there is provided a system of generating identification information of audio/video (A/V) devices existing on an A/V network, the system comprising: a slave device, including stored device information and first identification information, to operate in response to a predetermined control signal; and a master device to send a request for the device information and the first identification information to the slave device, to determine whether there are other slave devices having the same device information as the device information sent in response to the request, to generate second identification information if there are other slaves devices having the same device information, so that the respective slave devices having the same device information can be discriminated from one another.

According to still another aspect of the present invention, there is provided a method of generating identification information of audio/video (A/V) devices existing on an A/V network, the method comprising: sending a request for device information and first identification information of each of the slave devices; checking the device information transmitted in response to the request and determining whether there are existing devices having the same device information; if there are existing devices having the same device information, generating second identification information of each of the devices having the same device information; and generating user interfaces to prompt a user to select a predetermined slave device and displaying the generated user interfaces.

Embodiments of the invention will now be described, by way of example, with reference to the accompanying drawings, in which:
FIG. 1A is a view showing an operating procedure of a master device and slave devices existing on an A/V network, FIG. 1B is a view showing an example of a 2027 file in accordance with the CEA 2027 specification, and FIG. 1C is a view showing examples of displaying a user interface on a screen of each slave device;
FIG. 2 is a schematic block diagram of a system of generating identification information of A/V devices existing on an A/V network according to an embodiment of the present invention;
FIG. 3 is an internal block diagram of a master device in the system of generating identification information of A/V devices existing on an A/V network according to an embodiment of the present invention;
FIG. 4 is an internal block diagram of slave devices in the system of generating identification information of A/V devices existing on an A/V network according to an embodiment of the present invention;
FIGS. 5A through 5D show the state of an information table during an update procedure in the master device in the system of generating identification information of A/V devices existing on an A/V network according to an embodiment of the present invention;
FIGS. 6A and 6B show examples of displaying a 2027 file and user interfaces of a master device and a slave device generated based on the 2027 file on screens according to an embodiment of the present invention; and
FIG. 7 is a flowchart of a method for generating identification information of A/V devices existing on an A/V network according to an embodiment of the present invention.

By way of example, the term "A/V network" refers to an expandable Home Theater (XHT) network. However, it is understood that the term is not intended to limit the scope of the application and that the present invention may be applied to other types of networks, such as Home Wide Webs, HAVi, and the Microsoft-led Universal Plug and Play (UPnP) approach. The A/V devices indicate A/V related devices including an A/V playback device, an A/V storage device, an A/V output device, and so on.

In addition, a concept of the present invention is defined in CEA-2027 and a language employed to implement the present invention is HTML (Hyper-text Markup Language) 4.0. Further, device information of the A/V devices existing on an A/V network, e.g., a master device and slave devices, is based on 2027 files complying with the CEA 2027 specification.

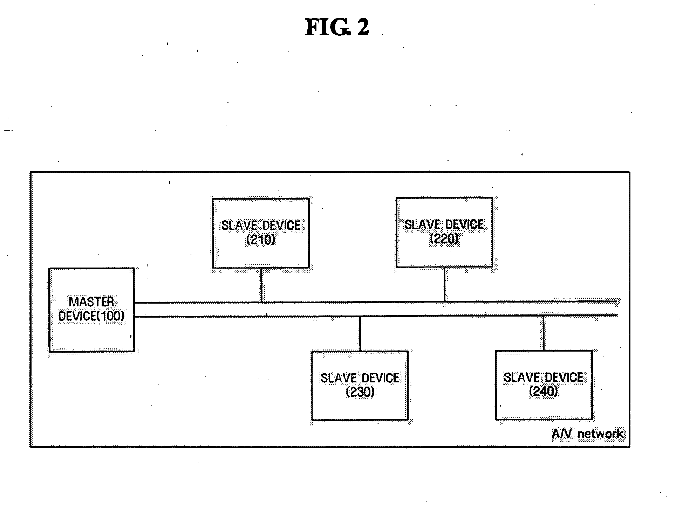

As shown in FIG. 2, the system of generating the identification information of A/V devices existing on an A/V network, according to an embodiment of the present invention, includes a master device 100, and slave devices 210, 220, 230, and 240. The master device 100 sends a request for device information and first identification information to the A/V devices existing on the A/V network, and determines whether or not there are slave devices having the same device information of the A/V network based on the device information and first identification information of each of the slave devices 210, 220, 230, and 240, which have been received in response to the request by the master device 100. If it is determined that there are slave devices having the same device information, the master device 100 generates second identification information of a corresponding slave device to differentiate the slave device from other slave devices. Here, the device information may be understood as a manufacturer name, a model number, and/or a descriptive term. First identification information may be understood as a unique identification number allocated to each device. The second identification information may also be understood as secondary name information of the A/V devices.

In addition, the master device 100 may control the slave devices 210, 220, 230, and 240 existing on the A/V network. The master device 100 may comprise a digital TV, a PDP, an LCD monitor, an audio receiver, and so on.

Each of the slave devices 210, 220, 230, and 240 stores unique device information and first identification information, and provides the master device 100 with the device information and first identification information stored therein when there is a request for the device information and first identification information from the master device 100. In addition, the slave devices 210, 220, 230, and 240 operate in response to a predetermined control signal transmitted to the master device 100.

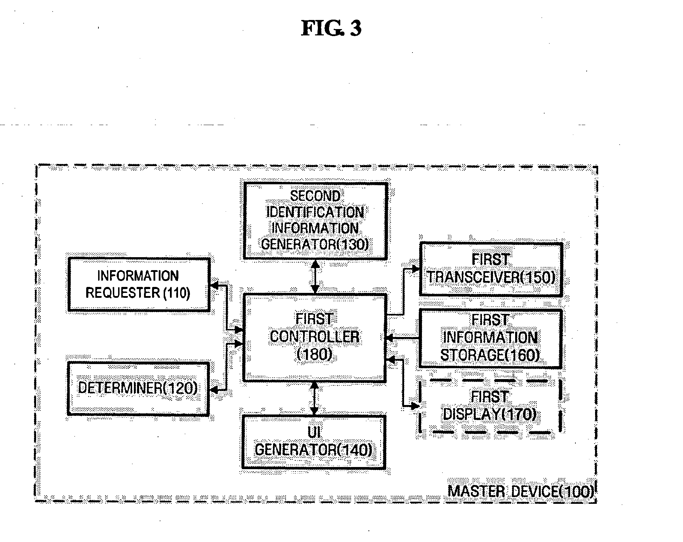

FIG. 3 is an internal block diagram of a master device 100according to an embodiment of the present invention. As shown in FIG. 3, the master device 100 includes an information requester 110, a determiner 120, a second identification information generator 130, a UI generator 140, a first transceiver 150, a first information storage 160, and a first controller 180. In a case where the master device 100 is provided with a display function, the master device 100 may further include a first display 170.

The information requester 110 sends a request for the device information and first identification information of each of the slave devices 210, 220, 230, and 240 existing on the A/V network. Here, the device information may include a manufacturer name, a model number, and a descriptive term, and the first identification information may be understood as a unique identification number of each device.

The determiner 120 checks the device information and first identification information of each of the slave devices 210, 220, 230, and 240 transmitted in response to the request sent from the information requester 110, and determines whether there are devices having the same device information (e.g., a manufacturer name, a model number, a descriptive term, etc.) or not. When it is determined that there are existing devices having the same device information, the determiner 120 also checks first identification information of the devices having the same device information, and determines whether the respective devices have the same first identification information.

In an exemplary embodiment, a 'DEVICE 1' and a 'DEVICE 2' exist on the A/V network. The 'DEVICE 1' has device information features including Samsung as a manufacturer name, LTN226W as a model number, and AVHDD as a descriptive term, and first identification information DSC20050400. Meanwhile, 'DEVICE 2' has device information features including Samsung as a manufacturer name, LTN226W as a model number, and AVHDD as a descriptive term, and first identification information DSC20050401.

First, the determiner 120 checks the device information of the 'DEVICE 1' and the 'DEVICE 2'. Here, the determiner 120 determines whether or not the 'DEVICE 1' and the 'DEVICE 2' have the same device information. Next, the determiner 120 checks the first identification information of the 'DEVICE 1' and the 'DEVICE 2' to determine whether the 'DEVICE 1' and the 'DEVICE 2' are the same devices or not.

If it is determined that the 'DEVICE 1' and the 'DEVICE 2' have the same device information but are different devices, the determiner 120 transmits the determination result to the first controller 180. Then, the first controller 180 controls the second identification information generator 130 to generate second identification information.

As the determination result of the determiner 120, if there are slave devices having the same device information, the second identification information generator 130 generates the second identification information of each of the devices having the same device information. Here, the generating of the second identification information comprises generating a secondary name of each of the devices having the same device information. The second identification information is generated based on the original name of each device.

In an exemplary embodiment, the second identification information may be generated in an 'original name n' format. Here, n is an arbitrary number and is sequentially counted whenever the second identification information is generated. The value n may vary optionally by the master device 100.

Assuming that the 'DEVICE 1' and the 'DEVICE 2' have the same device information, the second identification information generator 130 generates AVHDD 1 as the second identification information of the 'DEVICE 2' and provides the same to the 'DEVICE 2'. However, according to the hypothetical situation, the second identification information generator 130 does not generate second identification information of the 'DEVICE 1' and the 'DEVICE 1' uses its original name, e.g., AVHDD.

The UI generator 140 generates user interfaces (hereinafter, to be referred to as UIs) of A/V devices existing on the A/V network, i.e., the master device 100 and the slave devices 210, 220, 230, and 240 based on the device information and first identification information stored in the first information storage 160. Here, when a user intends to use a predetermined type of A/V device among the A/V devices existing on the A/V network, the UI of the A/V device is displayed on a display device.

In addition, in order to generate the UI of a corresponding one of the slave devices 210, 220, 230, and 240, it is checked first whether or not the first information storage 160 stores the second identification information of the corresponding slave device, and, if the first information storage 160 is found to store the second identification information, the UI generator 140 generates the UI of the corresponding slave device in accordance with the second identification information of the corresponding slave device. The UI of each of the slave devices 210, 220, 230, and 240 is also provided together with a manufacturer name thereof.

The first transceiver 150 transmits and receives data among the slave devices 210, 220, 230, and 240 through wired/wireless networks. The second transceiver 150 may be implemented by various network interfaces such as an IEEE 1394 network interface used in the XHT protocol, an IEEE 802.11 network interface for the wireless LAN protocol, or an Ethernet network interface for the wired communication protocol.

In an exemplary embodiment of the invention, the first transceiver 150 transmits a request for the device information and first identification information to the slave devices 210, 220, 230, and 240 existing on the A/V network, and receives the device information and first identification information of each of the slave devices 210, 220, 230, and 240, which are transmitted in response to the request. In addition, the first transceiver 150 transmits and receives a user's input selection command signal of instructing to select a corresponding one of the slave devices 210, 220, 230, and 240.

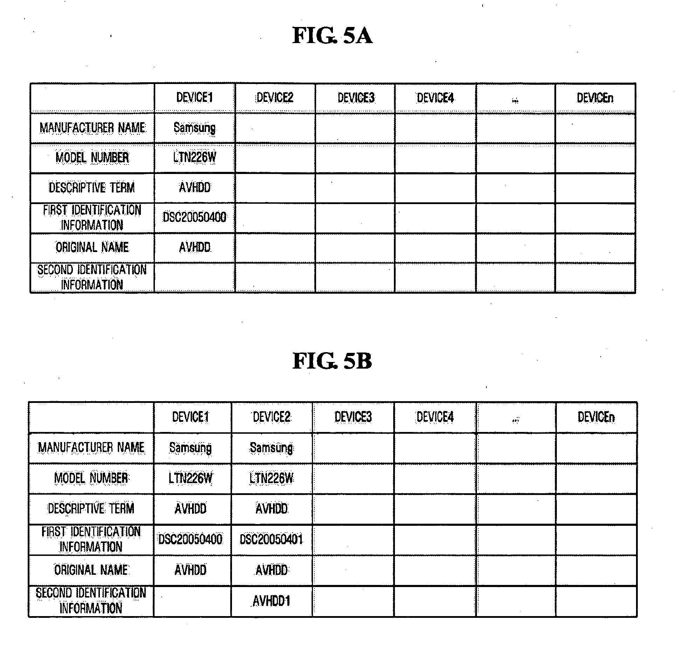

The first information storage 160 stores the device information, first identification information and original name of each of the slave devices 210, 220, 230, and 240 existing on the A/V network and the second identification information generated by the second identification information generator 130. Here, the first information storage 160 stores the device information in a tabulated form. The information table stored in the first information storage 160 is updated when a new A/V device, e.g., the master device 100, or each of the slave devices 210, 220, 230, and 240, is registered, when the second identification information is generated, or when the originally stored information, e.g., device information, first identification information, original name, second identification information, or the like, is renewed. The information table for the device information will be described in greater detail below with reference to FIGS. 5A-5D.

For example, where device information of a new A/V device, e.g., the master device 100, or each of the slave devices 210, 220, 230, and 240, is added to the first information storage 160, the first controller 180 updates the first information storage 160. In addition, where first information and second information of a new A/V device are newly added to the first information storage 160, the first controller 180 updates the first information storage 160.

The first display 170 delivers UIs of the A/V devices existing on the A/V network, which are generated by the UI generator 140.

The first controller 180 then controls the information requester 110 to request the slave devices 210, 220, 230, and 240 existing on the A/V network to transmit the device information and first identification information. If the second transceiver 150 receives the device information and first identification information, the first controller 180 controls the received device information and first identification information to be stored in the first information storage 160.

In addition, the first controller 180 controls the determiner 120 to determine whether there are slave devices having the same device information among the existing slave devices 210, 220, 230, and 240, based on the device information and first identification information stored in the first information storage 160. If it is determined that there are slave devices having the same device information among the slave devices 210, 220, 230, and 240, the first controller 180 controls the second identification information generator 130 to generate the second identification information of each of the slave devices having the same device information among the slave devices 210, 220, 230, and 240.

In addition, the first controller 180 updates the information stored in the first information storage 160, e.g., device information, first identification information, original name, and second identification information, or the like, when the device information and first identification information of a new slave device among the slave devices 210, 220, 230, and 240 are generated or when the second identification information of each of the slave devices 210, 220, 230, and 240 is generated.

When a user selects a corresponding one among the slave devices 210, 220, 230, and 240, the first controller 180 transmits a control signal to the corresponding slave device to control the slave devices 210, 220, 230, and 240 to be operated. Here, the input of the user to select the corresponding slave device may be applied to the master device 100 through a remote controller (not shown) or to a panel installed at a predetermined portion of the master device 100.

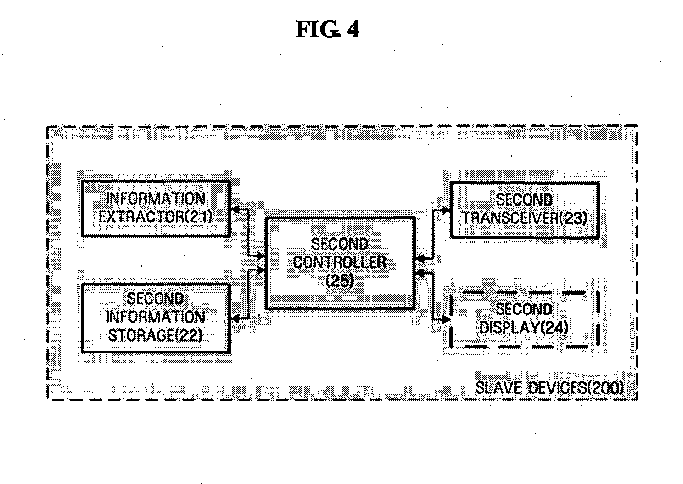

FIG. 4 is an internal block diagram of slave devices 200 (210 through 250) according to an embodiment of the present invention. As shown in FIG. 4, the slave devices 200 include an information extractor 21, a second information storage 22, a second transceiver 23, and a second controller 25. Where the slave devices 200 are provided with a display function, the slave devices 200 may further include a second display 24.

The information extractor 21 extracts the device information and first identification information of the slave devices 200. Here, the device information may include a manufacturer name, a model number, and a descriptive term, and the first identification information may be understood as a unique identification number of each device.

The second information storage 22 stores the device information and first identification information extracted by the information extractor 21.

The second transceiver 23 transmits and receives data to/from the master device 100 through wired/wireless networks. The second transceiver 23 may be implemented by various network interfaces such as an IEEE 1394 network interface used in the XHT protocol, an IEEE 802.11 network interface for the wireless LAN protocol, or an Ethernet network interface for the wired communication protocol. For example, the second transceiver 23 receives a request signal that requests the device information and first identification information from a master device (not shown) and transmits the device information and first identification information stored in the second information storage 22 in response to the request signal. The second display 24 delivers UIs of the A/V devices existing on an A/V network according to a display command issued from the master device. The second controller 25 controls the information extractor 21 to extract the device information and first identification information, and controls the second information storage 22 to store the extracted device information and first identification information.
In addition, when the second transceiver 23 receives a request command of instructing to transmit the device information and first identification information from the master device, the second controller 25 controls the second transceiver 23 to transmit the device information and first identification information stored in the second information storage 22 to the master device.

FIGS. 5A through 5D show how an information table in the master device is updated for different devices joining an A/V network according to an embodiment of the present invention, in which 'DEVICE 1' through 'DEVICE n' are A/V devices existing on the A/V network. As shown in FIGS. 5A through 5D, the information table contains various kinds of information regarding a device, including a manufacturer name, a model number, a descriptive term, first identification information, an original name, second identification information, and so on.

Referring first to FIG. 5A, the master device stores the device information, e.g., a manufacturer name, a model number, a descriptive term, etc., first identification information, and an original name of the 'DEVICE 1' in a tabulated format, that is, in the information table. Here, the original name of the 'DEVICE 1' is the same as the descriptive term.

Next, the master device stores the device information, e.g., a manufacturer name, a model number, a descriptive term, etc., first identification information, and original name of the 'DEVICE 2' in a tabulated format, that is, in the information table. Here, the original name of the 'DEVICE 2' is the same as the descriptive term. The master device 100 also stores device information, first identification information, and original name of the 'DEVICE 2' in the information table. Here, since the 'DEVICE 1' and the 'DEVICE 2' have the same manufacturer name, model number, and descriptive term, they also have the same original name.
Next, the master device 100 checks the first identification information of the 'DEVICE 1' and the 'DEVICE 2' to determine whether the 'DEVICE 1' and 'DEVICE 2' are different devices, and second identification information (e.g., AVHDD 1) of the 'DEVICE 2' is generated and stored in the information table (see FIG. 5B).

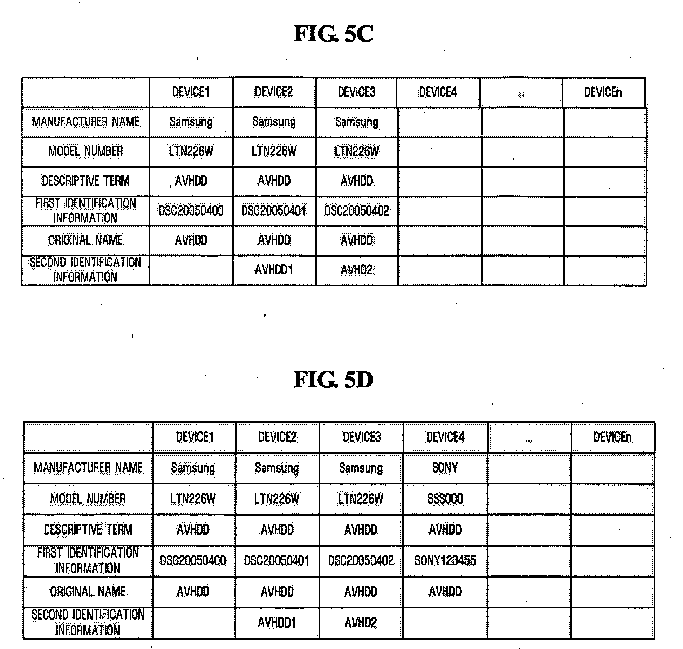

Then, the master device 100 stores device information, first identification information, and an original name of the 'DEVICE 3' in the information table. Here, since the 'DEVICE 2' and the 'DEVICE 3' have the same manufacturer name, model number, and descriptive term, they also have the same original name.
Then, the master device 100 checks the first identification information of the 'DEVICE 2' and the 'DEVICE 3' to determine whether the 'DEVICE 2' and 'DEVICE 3' are different devices, and second identification information (e.g., AVHDD 2) of the 'DEVICE 3' is generated and stored in the information table (see FIG. 5C).

Next, the master device 100 stores device information, first identification information, and an original name of the 'DEVICE 4' in the information table. Here, the 'DEVICE 1' and the 'DEVICE 4' have the same original name but different manufacturer names, different model numbers, and different descriptive terms. Thus, further identification information, that is, second identification information, is not necessary (see FIG. 5D).

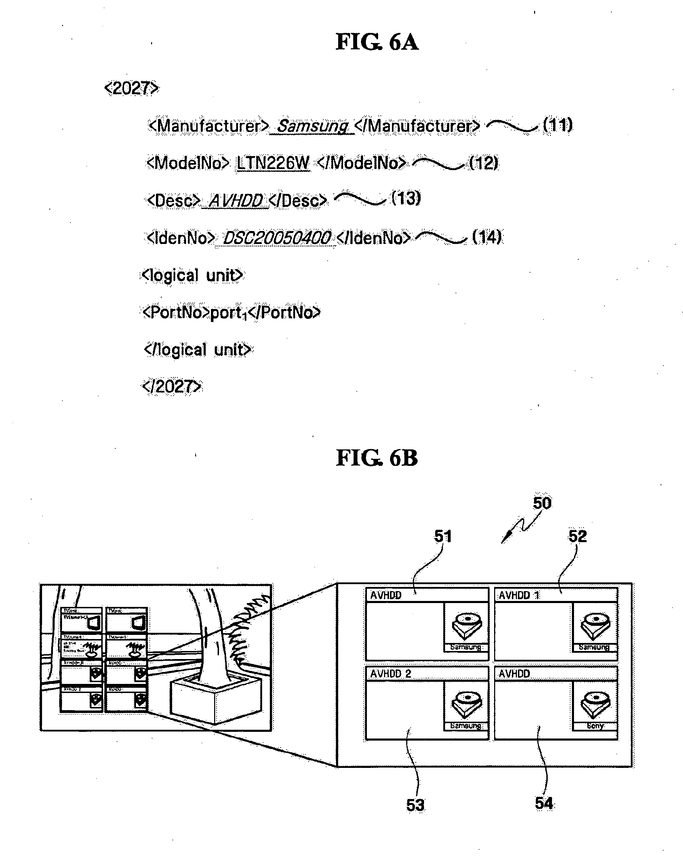

FIGS. 6A and 6B show examples of displaying a 2027 file and user interfaces of a master device and a slave device generated based on the 2027 file on screens according to an embodiment of the present invention.

Referring to FIG. 6A showing an example of a CEA 2027 compliant file content, i.e., a <2027> file, a manufacturer name of the A/V device, e.g., Samsung, is placed at a <Manufacturer> tag position labeled (11), a model number, e.g., LTN226W, is placed at a <ModelNo> tag labeled 52, AVHDD 2 position labeled (12), a descriptive term, e.g., AVHDD, is placed at a <Desc> tag position labeled (13), and first identification information, e.g., DCD20050400, is placed at a <IdenNo> tag position labeled (14).

Referring to FIG. 6B showing examples of UIs of various A/V devices existing on the A/V network, which are displayed on a screen 50, an original name (or second identification information) and a manufacturer name of each device are provided to the UI, thereby allowing a user to easily discriminate the device from the others. In other words, among the slave devices displayed on the screen 50, i.e., AVHDD labeled 51, AVHDD 1 labeled 52, AVHDD 2 labeled 53, and AVHDD labeled 54, the AVHDD devices 51, 52 and 53, which are the same in the manufacturer name, the model number and the original name, are provided with AVHDD as the original name and provided with AVHDD 1 and AVHDD 2 as second identification information, as represented by AVHDD, AVHDD 1 and AVHDD 2, respectively. By contrast, since the AVHDD device 54 has the same original name with but a different manufacturer name from the AVHDD device 51, it can be distinguished from the AVHDD device 51, the AVHDD 1 device 52 and the AVHDD 2 device 53.

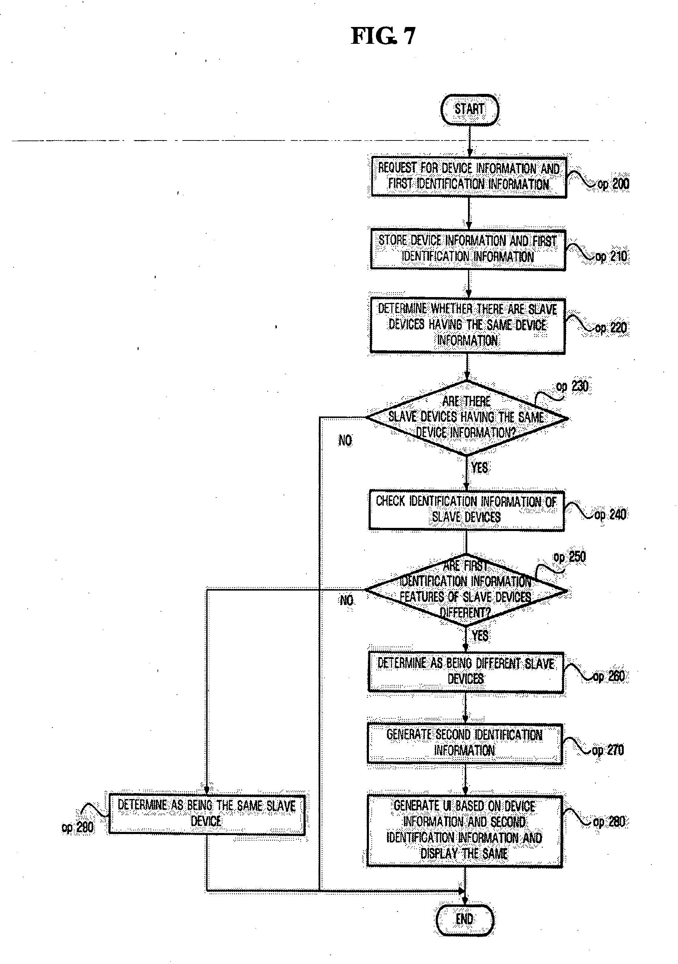

FIG. 7 is a flowchart of a method for generating identification information of A/V devices existing on an A/V network according to an embodiment of the present invention.

First, an information requester 110 of the master device 100 requests the device information and first identification information to the slave devices 200 existing on the A/V network in operation op 200. Here, the device information may include a manufacturer name, a model number, and a descriptive term, and the first identification information may be understood as a unique identification number of each device.

In operation op 210, the first controller 180 controls the device information and first identification information transmitted from the slave devices 200 to be stored in the first information storage 160. Here, the first information storage 160 stores the device information in a tabulated format (see FIG. 5). In addition, the first controller 180 generates an original name of each slave device using device information (e.g., descriptive term) of the slave devices 200.

In operation op 220, the first controller 180 requests the determiner 120 to determine whether there are slave devices 200 having the same device information and the determiner 120 determines whether or not there are existing slave devices 200 having the same device information.

If it is determined that there are existing slave devices 200 having the same device information (that is, YES in operation op 230), the determiner 120 checks the first identification information of the slave devices 200 stored in the first information storage 160 in operation op 240. It is then determined whether or not the slave devices 200 have different first identification information features from one another in operation op 250. When the slave devices 200 are determined to have different first identification information features from one another (that is, YES in operation op 250), it is determined in operation op 260 that the slave devices 200 are different slave devices with the same device information.
In an exemplary embodiment, the determiner 120 may check device information of the 'DEVICE 1' 210 and the 'DEVICE 2' 220 existing on the A/V network. According to a checked result of the device information, when the 'DEVICE 1' 210 and the 'DEVICE 2' 220 are found to have the same device information (e.g., manufacturer name-Samsung, model number-LTN226W, descriptive term-AVHDD), the determiner 120 checks first identification information of the 'DEVICE 1' 210 and the 'DEVICE 2' 220. As a check result of the first identification information, when the 'DEVICE 1' 210 and the 'DEVICE 2' 220 have different first identification information features, for example, DSC20050400 for 'DEVICE 1' and DSC20050401 for 'DEVICE 2', the devices are determined to be devices having the same device information with different first identification information.

Next, the first controller 180 requests that the second identification information generator 130 generates the second identification information of each of the slave devices 210 and 220 based on the determination result of the determiner 120. In response to the request, the second identification information generator 130 checks an original name of each of the slave devices 210 and 220 having the same device information to then generate second identification information for one of the slave devices, e.g., the slave device 220, in operation op 270. Here, the generated second identification information is stored in the first information storage 160, and the first information storage 160 is updated with a new information element accordingly.

In an exemplary embodiment of the invention, where both the 'DEVICE 1' 210 and the 'DEVICE 2' 220 have 'AVHDD' as their original name, the second identification information generator 130 generates second identification information, e.g., AVHDD 1, based on the original name of the 'DEVICE 2' 220. Then, the first controller 180 requests the UI generator 140 to generate UIs of the slave devices 200 to be offered to users. Responsively, UIs of the slave devices 200 are generated based on the device information and second identification information stored in the first information storage 160 in operation op 280. If the slave devices 200 have second identification information among various information features of the slave devices 200 stored in the first information storage 160, the UI generator 140 generates UIs of the slave devices 200 using the second identification information. If the slave devices 200 have no second identification information, the UI generator 140 generates UIs using their original names. In addition, manufacturer names of the slave devices 200 are also offered along with the UIs.

Next, the first controller 180 controls the UIs of the slave devices 200 to be displayed through the first display 170.

Meanwhile, if no slave devices 200 are determined to have the same device information (that is, NO in operation op 230), the process is terminated without the master device 100 performing further operations.

In addition, in operation op 250, when it is determined that the slave devices 200 have the same first information (that is, NO in operation op 250), the slave devices 200 are determined as being the same devices in operation op 290. Accordingly, the information feature of the corresponding slave devices may not be added to the first information storage 160 or the same information of the slave devices stored in the first information storage 160 is deleted.

Here, it is understood that the method described above may be embodied in a computer readable medium to store a program to execute the above-described method.

Although a few embodiments of the present invention have been shown and described, it would be appreciated by those skilled in the art that changes may be made in these embodiments without departing from the scope of the invention as defined in the claims.

## Claims

1. Apparatus (100) for generating identification information for slave devices connected to a network, the apparatus comprising:
means (110) for receiving device information and first identification information for each of the slave devices; and
means (120) for determining whether a first slave device has the same device information and different first identification information from a second slave device on the network;
in which the apparatus is configured to generate second identification information for a first slave device determined to have the same device information and different identification information from a second slave device;
the apparatus further comprising means (140) for generating a user interface for each slave device, each interface arranged to display a portion of the respective device information, and second identification information for each slave device for which second identification information has been generated.

2. An apparatus according to claim 1, wherein the first identification information is unique to each of the slave devices in the network.

3. An apparatus according to claim 1 or claim 2, further comprising:
means (160) for storing the device information, the first identification information and the generated second identification information.

4. An apparatus according to any one of the preceding claims, wherein the
means for generating second identification information is arranged to generate the second identification information based on a name associated with the slave device.

5. An apparatus according to any one of the preceding claims, wherein the slave devices comprise audio/video A/V devices on an A/V network.

6. A system for generating identification information for slave devices on a network, the system comprising:
a first slave device arranged to store device information and first identification information, and arranged to operate in response to a control signal received over the network; and
a master device arranged to send a request for the device information and the first identification information to the slave devices, and configured to:
determine whether there is a second slave device on the network having the same device information and different first identification information from that sent by the first slave device in response to the request;
generate second identification information for the second slave device; and
generate a user interface for each slave device, each interface arranged to display a portion of the respective device information, and
second identification information for each slave device for which said second identification information has been generated.

7. The system of claim 6, wherein the master device is arranged to deliver the generated user interfaces to users through a display device.

8. A method of generating identification information for slave devices in a network, the method comprising:
sending a request, from a master device to the slave devices, for device information and first identification information for each of the slave devices;
the master device checking device information and first identification information sent by the slave devices in response to the request;
generating second identification information for a slave device determined to have the same device information as another device but different first identification information from the other device; and
generating a user interface for each device, each interface displaying a portion of the respective device information, and second identification information for each slave device for which said second identification information has been generated.

9. A method according to claim 8, wherein the device information comprises a manufacturer name, a model number, and a descriptive term, and the first identification information comprises a unique identification number of each device.

10. A method according to claim 8 or claim 9, further comprising storing the device information in a tabulated format.

11. A method according to any one of claims 8 to 10, further comprising generating an original name of each slave device using the device information of the slave devices.

12. A method according to any one of claims 8 to 11, wherein, if devices are found to have different device information, no second identification information is generated.

13. A method according to any one of claims 8 to 12, wherein the step of generation of second identification information comprises:
checking an original name of the existing devices having the same device information;
storing the original name as the second identification information.

14. A computer program, which when executed on a processor, is arranged to perform a method according to any one of claims 8 to 13.

## Patentansprüche

1. Vorrichtung (100) zum Generieren von Identifizierungsinformationen für Slave-Geräte, die an ein Netzwerk angeschlossen sind, wobei die Vorrichtung umfasst:
eine Einrichtung (110) zum Empfangen einer Geräteinformation und einer ersten Identifizierungsinformation für jedes der Slave-Geräte; und
eine Einrichtung (120) zum Bestimmen, ob ein erstes Slave-Gerät die gleiche Geräteinformation und eine von einem zweiten Slave-Gerät in dem Netzwerk verschiedene erste Identifizierungsinformation hat;
wobei die Vorrichtung dazu ausgelegt ist, eine zweite Identifizierungsinformation für ein erstes Slave-Gerät zu generieren, für das bestimmt wurde, dass es die gleiche Geräteinformation und eine von einem zweiten Slave-Gerät verschiedene Identifizierungsinformation hat;
wobei die Vorrichtung ferner umfasst: eine Einrichtung (140) zum Generieren einer Benutzerschnittstelle für jedes Slave-Gerät, wobei jede Schnittstelle dazu eingerichtet ist, einen Bereich der jeweiligen Geräteinformation und die zweite Identifizierungsinformation für jedes Slave-Gerät anzuzeigen, für welches die zweite Identifizierungsinformation generiert wurde.

2. Vorrichtung nach Anspruch 1, wobei die erste Identifizierungsinformation für jedes von den Slave-Geräten in dem Netzwerk eindeutig ist.

3. Vorrichtung nach Anspruch 1 oder Anspruch 2, ferner umfassend:
eine Einrichtung (160) zum Speichern der Geräteinformation, der ersten Identifizierungsinformation und der generierten zweiten Identifizierungsinformation.

4. Vorrichtung nach einem der vorhergehenden Ansprüche, wobei die Einrichtung zum Generieren der zweiten Identifizierungsinformation dazu eingerichtet ist, die zweite Identifizierungsinformation basierend auf einem Name zu generieren, der mit Slave-Gerät verbunden ist.

5. Vorrichtung nach einem der vorhergehenden Ansprüche, wobei die Slave-Geräte Audio/Video (A/V) Geräte in einem A/V Netzwerk umfassen.

6. System zum Generieren von Identifizierungsinformationen für Slave-Geräte in einem Netzwerk, wobei das System umfasst:
ein erstes Slave-Gerät, das dazu eingerichtet ist, eine Geräteinformation und eine erste Identifizierungsinformation zu speichern, und das dazu eingerichtet ist, als Antwort auf ein vom Netzwerk empfangenes Steuersignal betrieben zu werden; und
ein Master-Gerät, das dazu eingerichtet ist, eine Anfrage der Geräteinformation und der ersten Identifizierungsinformation an die Slave-Geräte zu senden, und dazu ausgelegt ist,
zu bestimmen, ob ein zweites Slave-Gerät im Netzwerk ist, welches die gleiche Geräteinformation und eine erste Identifizierungsinformation hat, die von der durch das erste Slave-Gerät als Antwort auf die Anfrage gesendeten verschieden ist;
eine zweite Identifizierungsinformation für das zweite Slave-Gerät zu generieren; und
eine Benutzerschnittstelle für jedes Slave-Gerät zu generieren, wobei jede Schnittstelle dazu eingerichtet ist, einen Bereich der jeweiligen Geräteinformation und die zweite Identifizierungsinformation für jedes Slave-Gerät anzuzeigen, für welches die zweite Identifizierungsinformation generiert wurde.

7. System nach Anspruch 6, wobei das Master-Gerät dazu eingerichtet ist, die generierten Benutzerschnittstellen durch ein Anzeigegerät an die Benutzer zu liefern.

8. Verfahren zum Generieren von Identifizierungsinformationen für Slave-Geräte in einem Netzwerk, wobei das Verfahren umfasst:
Senden einer Anfrage für eine Geräteinformation und eine erste Identifizierungsinformation für jedes der Slave-Geräte von einem Master-Gerät an die Slave-Geräte;
Prüfen der Geräteinformation und der ersten Identifizierungsinformation, die durch die Slave-Geräte als Antwort auf die Anfrage gesendet wurden, durch das Master-Gerät;
Generieren einer zweiten Identifizierungsinformation für ein Slave-Gerät, für welches bestimmt wurde, dass es die gleiche Geräteinformation wie ein anderes Gerät aber eine von dem anderen Gerät verschiedene Identifizierungsinformation hat; und
Generieren einer Benutzerschnittstelle für jedes Gerät, wobei jede Schnittstelle einen Bereich der jeweiligen Geräteinformation und der zweiten Identifizierungsinformation für jedes Slave-Gerät anzeigt, für welches die zweite Identifizierungsinformation generiert wurde.

9. Verfahren nach Anspruch 8, wobei die Geräteinformation einen Herstellername, eine Modellnummer und eine beschreibende Bezeichnung umfasst und die erste Identifizierungsinformation eine eindeutige Identifizierungsnummer für jedes Gerät umfasst.

10. Verfahren nach Anspruch 8 oder Anspruch 9, ferner umfassend Speichern der Geräteinformation in einem tabellarischen Format.

11. Verfahren nach einem der Ansprüche 8 bis 10, ferner umfassend:
Generieren eines Originalnamens für jedes Slave-Gerät unter Verwendung der Geräteinformation der Slave-Geräte.

12. Verfahren nach einem der Ansprüche 8 bis 11, wobei keine zweite Identifizierungsinformation generiert wird, wenn festgestellt wurde, dass die Geräte verschiedene Geräteinformationen haben.

13. Verfahren nach einem der Ansprüche 8 bis 12, wobei der Schritt der Generierung der zweiten Identifizierungsinformation umfasst:
Prüfen eines Originalnamens der existierenden Geräte, die die gleiche Geräteinformation haben;
Speichern des Originalnamens als die zweite Identifizierungsinformation.

14. Computerprogramm, welches, wenn es auf einem Prozessor ausgeführt wird, dazu eingerichtet ist, ein Verfahren gemäß einem der Ansprüche 8 bis 13 durchzuführen.

## Revendications

1. Appareil (100) pour la génération d'une information d'identification pour des dispositifs asservis connectés à un réseau, l'appareil comportant :
un moyen (110) destiné à recevoir une information de dispositif et une première information d'identification pour chacun des dispositifs asservis ; et
un moyen (120) destiné à déterminer si un premier dispositif asservi a la même information de dispositif et une première information d'identification différente d'un second dispositif asservi sur le réseau ;
lequel appareil est configuré pour générer une seconde information d'identification pour un premier dispositif asservi déterminé comme ayant la même information de dispositif et une information d'identification différente d'un second dispositif asservi ;
l'appareil comportant en outre un moyen (140) destiné à générer une interface d'utilisateur pour chaque dispositif asservi, chaque interface étant agencée pour afficher une partie de l'information de dispositif respective, et une seconde information d'identification pour chaque dispositif asservi pour lequel une seconde information d'identification a été générée.

2. Appareil selon la revendication 1, dans lequel la première information d'identification est unique pour chacun des dispositifs asservis dans le réseau.

3. Appareil selon la revendication 1 ou la revendication 2, comportant en outre :
un moyen (160) destiné à stocker l'information de dispositif, la première information d'identification et la seconde information d'identification générée.

4. Appareil selon l'une quelconque des revendications précédentes, dans lequel le moyen destiné à générer une seconde information d'identification est agencé pour générer la seconde information d'identification sur la base d'un nom associé au dispositif asservi.

5. Appareil selon l'une quelconque des revendications précédentes, dans lequel les dispositifs asservis comprennent des dispositifs audio/vidéo A/V sur un réseau A/V.

6. Système pour la génération d'une information d'identification pour des dispositifs asservis sur un réseau, le système comportant :
un premier dispositif asservi agencé de façon à stocker une information de dispositif et une première information d'identification, et agencé pour fonctionner en réponse à un signal de commande reçu en passant par le réseau ; et
un dispositif d'asservissement agencé pour envoyer une demande pour l'information de dispositif et la première information d'identification aux dispositifs asservis, et configuré pour :
déterminer s'il y a un second dispositif asservi sur le réseau ayant la même information de dispositif et une première information d'identification différente de celle envoyée par le premier dispositif asservi en réponse à la demande ;
générer une seconde information d'identification pour le second dispositif asservi ; et
générer une interface d'utilisateur pour chaque dispositif asservi, chaque interface étant agencée de façon à afficher une partie de l'information de dispositif respective, et une seconde information d'identification pour chaque dispositif asservi pour lequel ladite seconde information d'identification a été générée.

7. Système selon la revendication 6, dans lequel le dispositif d'asservissement est agencé de façon à délivrer à des utilisateurs, par l'intermédiaire d'un dispositif d'affichage, les interfaces d'utilisateurs générées.

8. Procédé de génération d'une information d'identification pour des dispositifs asservis dans un réseau, le procédé comprenant :
l'envoi d'une demande, d'un dispositif d'asservissement aux dispositifs asservis, portant sur une information de dispositif et une première information d'identification pour chacun des dispositifs asservis ;
le dispositif d'asservissement vérifiant une information de dispositif et une première information d'identification envoyées par les dispositifs asservis en réponse à la demande ;
la génération d'une seconde information d'identification pour un dispositif asservi déterminée comme ayant la même information de dispositif qu'un autre dispositif, mais une première information d'identification différente de l'autre dispositif ; et
la génération d'une interface d'utilisateur pour chaque dispositif, chaque interface affichant une partie de l'information de dispositif respective, et une seconde information d'identification pour chaque dispositif asservi pour lequel ladite seconde information d'identification a été générée.

9. Procédé selon la revendication 8, dans lequel l'information de dispositif comprend un nom de fabricant, un numéro de modèle et un terme descriptif, et la première information d'identification comprend un numéro d'identification unique de chaque dispositif.

10. Procédé selon la revendication 8 ou la revendication 9, comprenant en outre le stockage de l'information de dispositif dans un format tabulé.

11. Procédé selon l'une quelconque des revendications 8 à 10, comprenant en outre la génération d'un nom original de chaque dispositif asservi en utilisant l'information de dispositif des dispositifs asservis.

12. Procédé selon l'une quelconque des revendications 8 à 11, dans lequel, si des dispositifs sont trouvés comme ayant une information de dispositif différente, aucune seconde information d'identification n'est générée.

13. Procédé selon l'une quelconque des revendications 8 à 12, dans lequel l'étape de génération d'une seconde information d'identification comprend :
la vérification d'un nom original des dispositifs existant ayant la même information de dispositif ;
le stockage du nom original en tant que seconde information d'identification.

14. Programme d'ordinateur qui, lorsqu'il exécuté sur un processeur, est agencé pour mettre en oeuvre un procédé selon l'une quelconque des revendications 8 à 13.
